# EUROPEAN PATENT SPECIFICATION

(11) **EP 2 233 269 B1**
(45) Date of publication and mention of the grant of the patent: **29.01.2020**
(21) Application number: 07858294.7
(22) Date of filing: 13.12.2007
(51) Int. Cl.: B29B 13/02, F27B 9/10, F27B 9/24, F27B 9/36, B29C 35/04, B29L 23/00

(54) **INSTALLATION, OVEN AND METHOD FOR HEATING PREFORM TUBES PRIOR TO THE MOLECULAR ORIENTATION THEREOF**
ANLAGE, OFEN UND VERFAHREN ZUR ERWÄRMUNG VON VORFORMLINGROHREN VOR DEREN MOLEKULARER AUSRICHTUNG
INSTALLATION, FOUR ET PROCÉDÉ DE CHAUFFAGE DE TUBES DE PRÉFORME PRÉALABLEMENT À LEUR ORIENTATION MOLÉCULAIRE

(43) Date of publication of application: 29.09.2010
(73) Proprietor: Molecor Tecnología S.l., 28521 Madrid (ES)
(72) Inventor: ARENA FERNÁNDEZ, Antonio, E-28521 Madrid (ES)
(74) Representative: Pons Ariño, Angel
(86) International application number: PCT/ES2007/070210
(87) International publication number: WO 2009/074694

(56) References cited:
- DE-C1- 4 436 577
- GB-A- 2 190 733
- US-A- 2 481 130
- US-A- 2 929 102
- US-A- 3 462 582
- US-A- 3 740 868
- US-A- 4 025 294
- US-A- 5 000 905

## Description

### OBJECT OF THE INVENTION

The field of application of the invention is included within the manufacturing processes of tubular profiles or molecularly oriented plastic tubes, and particularly discontinuous or in-batch systems.

The present invention relates to a facility, a heating oven according to claim 1 and the corresponding method according to claim 9 for the adaptation of initial or preformed tubes for the subsequent manufacture of molecularly oriented plastic tubes, particularly for their application in the manufacture of tubes, signage elements and light structural elements.

The object of the invention consists of a system to prepare the preformed tubes that shall be introduced in the mould for their subsequent molecular orientation, in such a manner that these are heated at a specific molecular orientation temperature to ensure maximum regularity and homogeneity in terms of thicknesses, always in a gaseous medium and in a fast and economic manner, using the facility and manufacturing method of this invention.

The facility is fundamentally comprised of a specially designed oven, fitted with both internal and external accessories that allow adequate air convection, displacement of the tubes along its interior and adequate control systems, optimizing both tube processing time and thermal homogeneity.

### BACKGROUND OF THE INVENTION

Molecular bio-orientation is a process by means of which, applying a mechanical deformation to a previously extruded or preformed tube under adequate temperature and pressure conditions, deformation speed and deformation radius, its mechanical properties are substantially modified, mainly material sigma (or tension), impact resistance, creep improvement (or thermofluency), fracture propagation resistance, improvement in elastic properties (Young module), etc.

By means of said molecular bio-orientation process, we can obtain an ultra-resistant tube using less raw material and with identical or superior performance to that of molecularly oriented tubes, thanks to the higher resistance of the material.

In order to strengthen the tube tangentially, i.e. the direction in which the material shall be strengthened so as to support the pressure, the previously extruded tube must be expanded radially, therefore increasing its diameter substantially.

At present, there are several tubular profile manufacturing systems, which can be grouped into two main categories: continuous or in-line systems and discontinuous or in-batch systems.

Bearing in mind that the equipment and method of the invention is included under the category of the second system mentioned, allusion shall be made mainly to discontinuous or in-batch systems, which consist of processes that produce the molecular orientation "element by element" based on the expansion of the preformed tube within a mould that gives the tubular profile its final shape.

Although there are several patents and documents that describe variants of molecular orientation, invention patent application WO98/13182 is worth mentioning among those patents that describe treatments prior to molecular orientation.

This document describes a continuous work process, from extrusion to the step prior to orientation. The tube, which has been extruded and slightly refrigerated to facilitate cutting thereof, is cut in adequate lengths and introduced in a hot-water tank, at a temperature of approximately 100ºC, which acts as a refrigerating means and cools the tube, thus lowering its temperature. The cooling system consists of a water tank, wherein tubes are stored during a certain period of time until being extracted from said tank and used.

The main characteristics of said method reside in the fact that it is based on a continuous work process (the tubes are treated immediately after being extruded and are therefore hot) and that the guillotine cutting system acts on the tubes while these are still hot and in a plastic state. The water tank is fitted with a support for the tubes to be refrigerated at a specific and unique temperature therein, and an axial water current is created by means of pumps, in addition to an oscillating movement to improve thermal transfer.

This system has the following disadvantages:
- it is a system conceived for a continuous work process immediately after extrusion, taking advantage of the tube's plastic state resulting from its high temperature, due to which it cannot accept tubes stored at room temperature;
- water is an element which, once heated, wets the tube, upon which its manipulation entails dirtiness problems and implementing precautionary measures in the electrical systems, being an element which is difficult to work with in subsequent processes, such as finish, etc.;
- the high temperature of the water used (approximately 100ºC), close to boiling point, makes it potentially dangerous in case of inadequate manipulation or leaks, and requires a system that impedes excessive evaporation and vapour loss;
- the water, in turn, due to its high specific temperature, is a very inertial system that lengthens the starting and stopping time of the facility, as the water must be previously cooled;
- access to the tank may be from above, which limits the flexibility of the system both in terms of production and sample taking, verification, manipulation, etc.;
- the whole tank must have the same temperature, due to which multi-zone processes cannot be implemented, i.e. zones in which the tubes have different temperatures in order to optimize production times, nor can the orientation conditions at the ends of the tubes vary for the production of integrated heads;
- the parts being treated support each other, in an uncontrolled manner and with an irregular flow, due to which temperature homogeneity in thicknesses is not guaranteed, or is guaranteed but with excessive residence times; and
- this system is only valid in the case of polymers with a higher density than water, because if the polymers were less dense they would float, rendering the system invalid.

It is also known document US-A-3740868 which discloses a heating oven for preformed tubes prior to their molecular orientation wherein it comprises rotating supports disposed parallel to each other on which the preformed tubes rest and rotates during the homogeneous circumferential heating process thereof.

### DESCRIPTION OF THE INVENTION

The facility and heating process of the preformed tube, prior to its molecular orientation, that comprises the object of this invention, solves the problems and inconveniences mentioned in the preceding section, thereby allowing a more efficient and homogeneous adaptation and preparation of the preformed tubes in terms of thickness, the equipment used being much less sophisticated and expensive than that currently used, which substantially reduces costs and processing times, in addition to the cost of said equipment, thereby allowing these products to reach the market at a much more competitive price and with a superior finish quality.

Additionally, it must be pointed out that this facility offers other advantages in terms of:
- its validity in continuous or discontinuous systems indistinctly, as it has been conceived to work with cold tubes (at room temperature) that have not necessarily been extruded, but rather fed from a stock of initial tubes;
- its validity for tubes made of any polymer, including polymers with a lower density than water, as the heating fluid is air;
- offering high process security on using air instead of water as the heating fluid, therefore avoiding burns in case of accidental aperture or inadequate manipulation or maintenance; and
- allowing the existence of different temperature zones to optimize the cycles or achieve different temperature distributions in different parts of the tube.

More specifically, the facility of the invention is comprised of a feeder in which the plastic tubes or tubular profiles are maintained at room temperature and a special oven for air-based dry heating of said tubes, from room temperature to orientation temperature.

The oven, which in itself represents an object of the invention, ensures circumferential homogeneity of the tube in terms of temperature and thickness, independently of whether the tubes are fed in a continuous or discontinuous manner, while the heating facility also represents an object of the invention in itself, and includes the oven and feeder that houses the tubes at room temperature, from which the tubes are fed to the oven in a discontinuous manner.

Although this oven offers the possibility of allowing access from all directions, the preformed tubes shall preferably enter said oven in an axial direction, and for the sake of simplicity, at the same level as when they are heated. The loss of hot air is insignificant, as opposed to the facility of patent WO 98/13182, which does not allow this multiple access and has much larger apertures, wherein the fluid leaks out in the form of water vapour, which is more energetic and problematic.

The oven shall preferably be provided with internal displacement systems, along which the tubes proceed step by step and transversely between rotating supports one by one, towards the exit. The number of steps or supports disposed in the oven shall depend on the desired permanence time of the tubes to be manufactured.

The aforementioned rotating tube supports consist of parallel groups of longitudinal rollers, spaced out and motorized, disposed in such a manner that, while the preformed tube is resting on said rollers, these rotate around their axial axis and, by contact, produce the rotation of the other preformed tubes resting thereupon. This continuous movement guarantees circumferential thermal homogeneity from the first instant and throughout the whole process.

One of the fundamental parts of the oven consists of an internal air convection system, the main constituent elements of which include: powerful fans that move the air at great speed, a deflector system that directs the air flow in the right direction in order to optimize thermal transfer, and a system comprised of probes, controls and elements that enable the creation of areas with different temperatures and parameters with respect to adjacent areas within the enclosure.

This difference represents a substantial improvement with respect to the invention described in the preceding section, as the cold tubes that enter the system at temperatures below that of orientation in their initial positions may be heated and subsequently processed at orientation temperature, in order to ensure homogeneity, thereby reducing total uniform heating process time.

Also in accordance with the invention, the areas of one of the ends of the tubes may be further heated in order to differentiate their temperature with respect to the rest of the tube, for example if the mould produces integrated heads and different orientation conditions are required. This difference in induced longitudinal temperature does not contradict the fundamental fact that this oven is conceived to guarantee a very high and improved thermal homogeneity with respect to the invention described in the preceding section, in terms of temperature distribution in circumferential tube thickness.

Additionally, a blowing system comprised of axial air projectors may be added to the main convection system, which axially introduce the hot air into the preformed tube, thereby increasing thermal performance and transmission along the inner walls of the tube.

On the other hand, the object of the invention also includes the previously described heating system, which takes place in the facility prior to introducing the preformed tube in the mould where it is molecularly bio-oriented.

The heating process consists of the following phases:
- introduction of a preformed tube which is initially at room temperature into the air oven; and
- heating of the preformed tube in the air oven with air, in accordance with a dry process in the absence of humidity, until it reaches molecular orientation temperature; wherein the preformed tube rotates around its axis during the heating process for a certain time interval along a section of the oven, followed by a transverse displacement to another parallel section, in which the rotation and transverse displacement take place consecutively until the preformed tube exits the oven, in order to obtain a homogeneous circumferential and thickness temperature.

Additionally, according to a possible embodiment, the heating process is carried out uniformly with different temperatures in different areas along the length of the preformed tube, particularly at its head.

This heating process is valid for preformed tubes made of polymeric material, both for those with a higher and lower density than the water.

### DESCRIPTION OF THE DRAWINGS

For the purpose of complementing the preceding description and to further explain the characteristics of the invention, a set of drawings in accordance with a preferred embodiment thereof has been included as an integral part of said description, in which the following figures have been represented in an illustrative and unlimitative manner:
Figure 1 represents a plan view of the oven feeder and a partial section of the oven.
Figure 2 represents an axial section of the oven represented in figure 1 along plane A-A, showing the different constituent parts of said oven, in addition to the main air flows, in which the fans are disposed at an upper position in such a manner that the hot air flow is directed downwards.
Figures 3A to 3D represent a sectional view of the oven along plane A-A, showing four sequences of movement as the tubes proceed along the interior of the oven.
Figure 4 represents a sectional view of the oven, in the version that includes a fan at a lower position and wherein deflectors are disposed in such a manner that the hot air flow is directed upwards.

### PREFERRED EMBODIMENT OF THE INVENTION

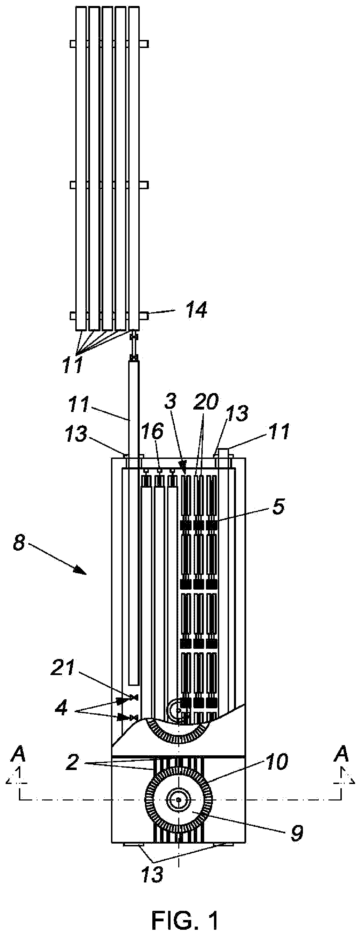

A preferred form of embodiment of the facility of the invention is described below which, as may be observed in figure 1, is fundamentally comprised of:
- a feeder (14) in which the preformed tubes (11) are contained at room temperature; and
- an air oven (8) that receives the preformed tubes (11) from the feeder (14), wherein the preformed tubes (11) are dry heated until reaching a uniform temperature throughout their thickness, prior to being unloaded and directed towards the mould, not represented, in which they are molecularly bio-oriented.

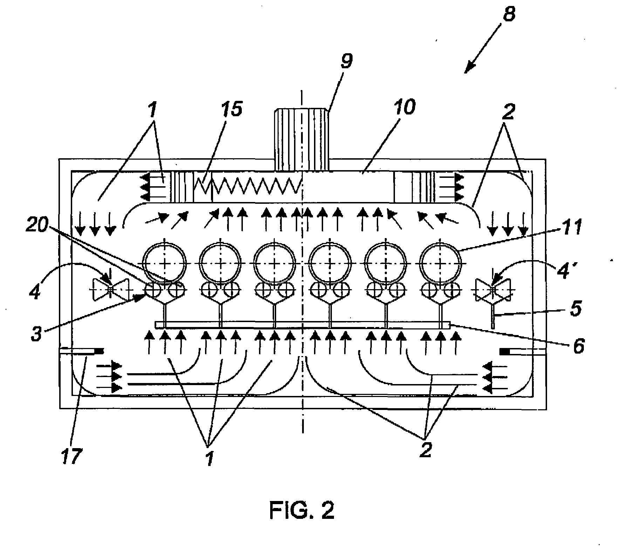

As shown in Figure 2, the oven (8) generally comprises:
- rotating supports (3) disposed parallel to each other on which the preformed tubes (11) rest and rotate during the homogeneous circumferential heating process thereof;
- transverse displacement means (5, 6) that facilitate the elevation of the preformed tubes (11) and their transverse displacement, in order to favour progressive and uniform heating throughout the thickness of the preformed tube (11); and
- assemblies that generate heating currents (15, 10, 2) comprised of elements (15), fans (10) and deflectors (2) distributed longitudinally in sectors or quadrants in the interior of the oven (8) to heat and distribute the air over the preformed tube (11).

Each of the rotating supports (3) is fundamentally comprised of parallel groups of longitudinal rollers (20), spaced out and motorized, as shown in Figure 1.

In a complementary manner, the oven (8) may include incoming (4) and outgoing (4') axial displacement means as represented, for example, in Figure 2, to facilitate the entrance and/or exit of the preformed tubes (11), which shall preferably be comprised of motorized transverse rollers (21) with a preferably conical configuration.

The transverse displacement means (5, 6) are comprised of a tray (6) and transferring supports (5) fixed to said tray (6), disposed in correspondence with the spaces between the longitudinal rollers (20) and between the transverse rollers (21) for the elevation and transverse displacement of the preformed tubes (11) towards and/or from a rotating support (3).

The oven (8) has a thermally insulated, double-walled metal casing that confines the heated enclosure, with lateral or front and rear accesses for lateral or axial feeding, Figure 1 showing an axial entrance and exit door (13) in correspondence with said accesses, the aperture of which shall preferably be vertical, although it could also be horizontal. Once the door (13) is opened, the preformed tube (11) may proceed axially thanks to the transverse rollers (21), which allow the preformed tube (11) to enter or exit the oven (8) by rotating in one direction or another.

Each of the rows of longitudinal rollers (20) of the rotating support (3) discontinuously support the preformed tube (11) to be processed, along two of its planes, as shown in Figure 2. By contact, the rotation of the longitudinal rollers (20) cause the preformed tube (11) resting on these to rotate.

The preformed tube (11) rotates on the longitudinal rollers (20) that are disposed underneath the line of contact planes of the preformed tube (11). When the tube passes from one rotating support (3) to another, both the tray (6) and transferring supports (5), which are solidary, rise above said plane and sustain the preformed tube (11), then move perpendicularly and back down until the preformed tube (11) rests on another rotating support (3) closer to the exit.

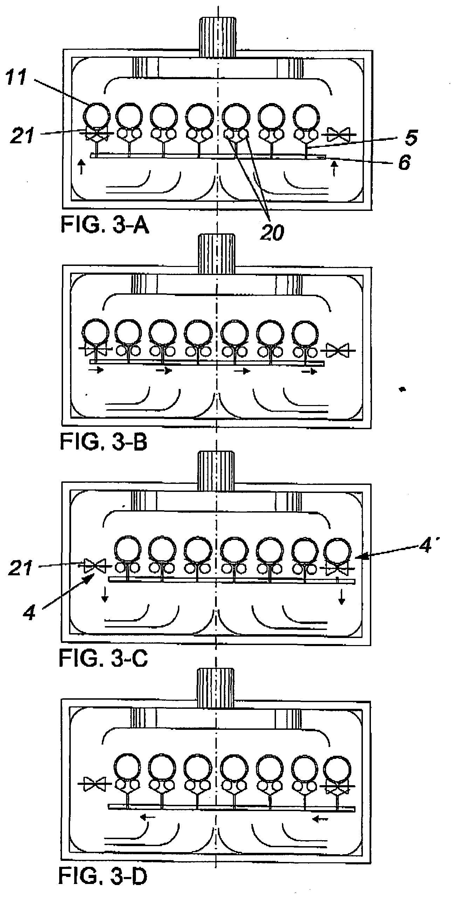

While the preformed tubes (11) are resting on the rotating longitudinal rollers (20), these rotate and are affected by the hot air current (1), as shown in figures 2 or 3, which is impelled by the fans (10) actuated by their respective motors (9) and heated by the elements (15) disposed at the exit of the fan (10). The activation of said elements (15) is controlled by conveniently disposed pyrometric detectors (17).

This hot air current (1) is directed by means of deflectors (2), which direct the fluid in a normal manner towards the preformed tube (11) with a minimum loss of energy, thereby allowing an optimum distribution to achieve maximum thermal homogeneity and heating speed in the actuation quadrant.

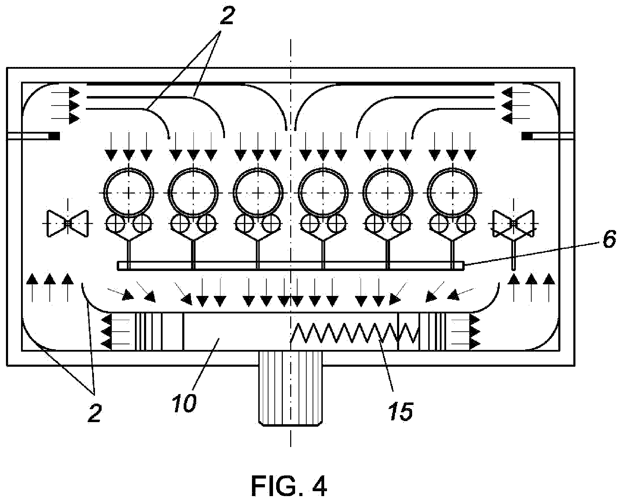

In the embodiment represented in Figure 2, the fans (10) are disposed at an upper position and the heated air is projected upwards by the deflectors (2) onto the preformed tubes (11). In another possible embodiment represented in Figure 4, the fans (10) are disposed at a lower position and the heated air is projected downwards by the deflectors (2) over the preformed tubes (11). According to the solution envisaged in this last embodiment, a better distribution of hot air over the surface of the preformed tube (11) is achieved, as the air hits the surface of the preformed tube (11) directly without the intervention of other parts such as longitudinal rollers (20).

The oven (8) shall also include axial air projectors (16), represented in Figure 1, that generate a secondary air current directed axially towards the preformed tube (11), which is introduced along the interior of said oven (8), thereby heating its inner side.

The deflectors (2) and fans (10) create semi-static air currents, which differentiate and control the temperatures in the different quadrants. The elements (15) are also disposed in two areas and controlled by the pyrometric detectors (17), in order to achieve the desired regulation.

The preformed tube movement process is represented in figures 3A to 3D.

Figure 3A shows the preformed tube (11) penetrating the oven (8) with the help of the longitudinal rollers (21) all the way through. At that moment, the rotation tray (6) rises and the transferring supports (5), which are disposed in correspondence with the discontinuities of the roller rows (20, 21) raise the preformed tubes (22) and suspend them in a vacuum, as shown in Figure 3B.

When the tray (6) is disposed at an upper position it moves transversely along the same length as that between the rotating supports (3), in such a manner that these remain suspended over the rotating support (3). The preformed tube (11) that was disposed in the last row of the rotating supports (3) proceeds to the line of outgoing (4') axial displacement means, as shown in Figure 3C. From that moment, the tray (6) is lowered and deposits the preformed tubes (11) once again on the rotating supports (3), in such a manner that these have advanced a position. The preformed tube (11) in the row corresponding to the outgoing (4') displacement means then moves towards the exterior by means of the rotating transverse rollers (21), as shown in Figure 3D, upon aperture of the exit door (13).

The tray (6), which is disposed at a lower position, then returns to its initial position by means of a transverse movement until the next operation. From that moment, the longitudinal rollers (20) start rotating and therefore the preformed tubes (11) resting thereupon, continuing with their heating cycle.

## Claims

1. Heating oven for preformed tubes (11) prior to their molecular orientation, **characterized in that** it comprises:
- rotating supports (3) disposed parallel to each other on which the preformed tubes (11) rest and rotate during the homogeneous circumferential heating process thereof;
- transverse displacement means (5, 6) that facilitate the elevation of the preformed tubes (11) and their transverse displacement, in order to favour progressive and uniform heating throughout the thickness of the preformed tube (11); and
- assemblies that generate heating currents (15, 10, 2) comprised of elements (15), fans (10) and deflectors (2) distributed longitudinally in sectors or quadrants in the interior of the oven (8) to heat and distribute the air over the preformed tube (11).

2. Heating oven for preformed tubes (11) prior to their molecular orientation, according to claim 1, **characterized in that** each of the rotating supports (3) comprises parallel groups of longitudinal rollers (20), spaced out and motorized.

3. Heating oven for preformed tubes (11) prior to their molecular orientation, according to one of claims 1 or 2, **characterized in that** it comprises incoming (4) and outgoing (4') axial displacement means in order to facilitate the entrance and/or exit of the preformed tubes (11).

4. Heating oven for preformed tubes (11) prior to their molecular orientation, according to claim 3, **characterized in that** the incoming (4) and outgoing (4') axial displacement means consist of motorized transverse rollers (21) with conical configuration.

5. Heating oven for preformed tubes (11) prior to their molecular orientation, according to claims 1, 2 and 4, **characterized in that** the transverse displacement means (5, 6) are comprised of a tray (6) and transferring supports (5) fixed to said tray (6) and disposed in correspondence with the transverse rollers (21) and the spaces between the longitudinal rollers (20) for the elevation and transverse displacement of the preformed tubes (11) towards and/or from a rotating support (3).

6. Heating oven for preformed tubes (11) prior to their molecular orientation, according to claim 1, **characterized in that** it comprises axial air projectors (16) that generate a secondary air current directed axially towards the preformed tube (11), which is introduced along the interior of said oven, thereby heating its inner side.

7. Heating oven for preformed tubes (11) prior to their molecular orientation, according to claim 1, **characterized in that** the fans (10) are disposed at an upper position and the deflectors (2) are disposed in such a manner that the hot air is projected downwards over the surface of the preformed tube (11).

8. Heating facility for preformed tubes (11) prior to their molecular orientation, according to claim 1, **characterized in that** it comprises:
- a feeder (14) that maintains the preformed tubes (11) at room temperature; and
- an oven (8), described in any of claims 1 to 7, that receives the preformed tubes (11) from the feeder (14) and uses air as a heating fluid to dry heat the preformed tubes (11) until these reach a uniform temperature in terms of thickness.

9. Procedure for heating preformed tubes (11) prior to their molecular orientation, comprising the introduction of a preformed tube, which is initially at room temperature, into an air oven (8); and heating of the preformed tube (11) in the air oven (8), in accordance with a dry process with the absence of humidity, until it reaches molecular orientation temperature **characterized in that** the preformed tube (11) rotates around its axis during the heating process for a certain time interval along a section of the oven (8), followed by a transverse displacement to another parallel section, in which the rotation and transverse displacement take place consecutively until the preformed tube (11) exits the oven, in order to obtain a homogeneous circumferential and thickness temperature.

10. Procedure for heating preformed tubes (11) prior to their molecular orientation, according to claim 9, **characterized in that** the heating process is carried out uniformly with different temperatures in different areas along the length of the preformed tube (11).

11. Procedure for heating preformed tubes (11) prior to their molecular orientation, according to claim 9, **characterized in that** the preformed tubes (11) are made of polymeric material.

## Patentansprüche

1. Heizofen für vorgeformte Rohrleitungen (11) vor ihrer molekularen Ausrichtung **dadurch gekennzeichnet, dass** dieser Folgendes umfasst:
- Drehstützen (3), die parallel zueinander angeordnet sind, auf denen die vorgeformten Rohrleitungen (11) aufliegen und während des homogenen umlaufenden Erwärmungsverfahrens davon drehen;
- Querverschiebungsmittel (5, 6), welche die Erhöhung der vorgeformten Rohrleitungen (11) und ihre Querverschiebung erleichtern, um eine progressive und gleichförmige Erwärmung über die gesamte Dicke der vorgeformten Rohrleitung (11) zu begünstigen; und
- Anordnungen, welche die Erwärmungsströme (15, 10, 2) erzeugen, die aus Elementen (15), Gebläsen (10) und Ablenkern (2) bestehen, die längs in Sektoren oder Quadranten im Innenraum des Ofens (8) verteilt sind, um die Luft über die vorgeformte Rohrleitung (11) zu erwärmen und zu verteilen.

2. Heizofen für vorgeformte Rohrleitungen (11) vor ihrer molekularen Ausrichtung nach Anspruch 1, **dadurch gekennzeichnet, dass** jede der Drehstützen (3) parallele Gruppen von Längswalzen (20) umfasst, die beabstandet und motorisiert sind.

3. Heizofen für vorgeformte Rohrleitungen (11) vor ihrer molekularen Ausrichtung nach einem der Ansprüche 1 oder 2, **dadurch gekennzeichnet, dass** dieser eingehende (4) und ausgehende (4') axiale Verschiebungsmittel umfasst, um den Eintritt und/oder Austritt der vorgeformten Rohrleitungen (11) zu erleichtern.

4. Heizofen für vorgeformte Rohrleitungen (11) vor ihrer molekularen Ausrichtung nach Anspruch 3, **dadurch gekennzeichnet, dass** die eingehenden (4) und ausgehenden (4') axialen Verschiebungsmittel aus motorisierten Querwalzen (21) mit kegelförmiger Konfiguration bestehen.

5. Heizofen für vorgeformte Rohrleitungen (11) vor ihrer molekularen Ausrichtung nach einem der Ansprüche 1, 2 und 4, **dadurch gekennzeichnet, dass** die Querverschiebungsmittel (5, 6) aus einer Ablage (6) und Transferstützen (5) umfasst sind, die an der Ablage (6) befestigt sind und in Übereinstimmung mit den Querwalzen (21) und den Räumen zwischen den Längswalzen (20) zur Erhöhung und Querverschiebung der vorgeformten Rohrleitungen (11) in Richtung und/oder von einer Drehstütze (3) angeordnet sind.

6. Heizofen für vorgeformte Rohrleitungen (11) vor ihrer molekularen Ausrichtung nach Anspruch 1, **dadurch gekennzeichnet, dass** dieser axiale Luftprojektoren (16) umfasst, die einen sekundären Luftstrom erzeugen, der axial in Richtung der vorgeformten Rohrleitung (11) gerichtet ist, der entlang des Innenraums des Ofens eingeführt wird, wodurch dessen Innenseite erwärmt wird.

7. Heizofen für vorgeformte Rohrleitungen (11) vor ihrer molekularen Ausrichtung nach Anspruch 1, **dadurch gekennzeichnet, dass** die Gebläse (10) an einer oberen Position angeordnet sind und die Ablenker (2) derart angeordnet sind, dass die heiße Luft nach unten über die Oberfläche der vorgeformten Rohrleitung (11) projiziert wird.

8. Heizungsanlage für vorgeformte Rohrleitungen (11) vor ihrer molekularen Ausrichtung nach Anspruch 1, **dadurch gekennzeichnet, dass** diese Folgendes umfasst:
- eine Zufuhr (14), welche die vorgeformten Rohrleitungen (11) bei Raumtemperatur hält; und
- einen Ofen (8) nach einem der Ansprüche 1 bis 7, der die vorgeformten Rohrleitungen (11) von der Zufuhr (14) aufnimmt und die Luft als ein Heizfluid zum Trockenwärmen der vorgeformten Rohrleitungen (11) verwendet, bis diese eine gleichförmige Temperatur im Hinblick auf ihre Dicke erreichen.

9. Vorgang zum Erwärmen von vorgeformten Rohrleitungen (11) vor ihrer molekularen Ausrichtung, umfassend das Einführen einer vorgeformten Rohrleitung, die anfänglich bei Raumtemperatur ist, in einen Luftofen (8); und Erwärmen der vorgeformten Rohrleitung (11) in dem Luftofen (8) gemäß einem Trockenverfahren in Abwesenheit von Feuchtigkeit, bis diese eine molekulare Ausrichtungstemperatur erreicht, **dadurch gekennzeichnet, dass** die vorgeformte Rohrleitung (11) für ein bestimmtes Zeitintervall während des Erwärmungsverfahrens entlang eines Abschnitts des Ofens (8) um ihre Achse dreht, gefolgt durch eine Querverschiebung zu einem anderen parallelen Abschnitt, wobei die Dreh- und Querverschiebung nacheinander stattfinden, bis die vorgeformte Rohrleitung (11) den Ofen verlässt, um eine homogene umlaufende und Dickentemperatur zu erhalten.

10. Vorgang zum Erwärmen von vorgeformten Rohrleitungen (11) vor ihrer molekularen Ausrichtung, nach Anspruch 9, **dadurch gekennzeichnet, dass** das Erwärmungsverfahren gleichförmig mit unterschiedlichen Temperaturen in unterschiedlichen Bereichen entlang der Länge der vorgeformten Rohrleitung (11) ausgeführt wird.

11. Vorgang zum Erwärmen von vorgeformten Rohrleitungen (11) vor ihrer molekularen Ausrichtung, nach Anspruch 9, **dadurch gekennzeichnet, dass** die vorgeformten Rohrleitungen (11) aus Polymermaterial hergestellt sind.

## Revendications

1. Four de chauffage pour tubes préformés (11) avant leur orientation moléculaire, **caractérisé en ce qu'**il comprend :
- des supports rotatifs (3) disposés parallèles les uns aux autres sur lesquels les tubes préformés (11) reposent et tournent pendant le processus de chauffage circonférentiel homogène ;
- des moyens de déplacement transversal (5, 6) qui facilitent l'élévation des tubes préformés (11) et leur déplacement transversal, afin de favoriser un chauffage progressif et uniforme dans toute l'épaisseur du tube préformé (11) ; et
- des ensembles qui génèrent des courants de chauffage (15, 10, 2) composés d'éléments (15), de ventilateurs (10) et de déflecteurs (2) répartis longitudinalement en secteurs ou quadrants à l'intérieur du four (8) pour chauffer et répartir l'air sur le tube préformé (11).

2. Four de chauffage pour tubes préformés (11) avant leur orientation moléculaire, selon la revendication 1, **caractérisé en ce que** chacun des supports rotatifs (3) comprend des groupes parallèles de rouleaux longitudinaux (20), espacés et motorisés.

3. Four de chauffage pour tubes préformés (11) avant leur orientation moléculaire, selon l'une des revendications 1 ou 2, **caractérisé en ce qu'**il comprend des moyens de déplacement axial entrant (4) et sortant (4') afin de faciliter l'entrée et/ou la sortie des tubes préformés (11).

4. Four de chauffage pour tubes préformés (11) avant leur orientation moléculaire, selon la revendication 3, **caractérisé en ce que** les moyens de déplacement axial entrant (4) et sortant (4') sont constitués de rouleaux transversaux motorisés (21) de configuration conique.

5. Four de chauffage pour tubes préformés (11) avant leur orientation moléculaire, selon les revendications 1, 2 et 4, **caractérisé en ce que** les moyens de déplacement transversal (5, 6) sont composés d'un plateau (6) et de supports de transfert (5) fixés audit plateau (6) et disposés en correspondance avec les rouleaux transversaux (21) et les espaces entre les rouleaux longitudinaux (20) pour l'élévation et le déplacement transversal des tubes préformés (11) vers et/ou depuis un support rotatif (3).

6. Four de chauffage pour tubes préformés (11) avant leur orientation moléculaire, selon la revendication 1, **caractérisé en ce qu'**il comprend des projecteurs d'air axiaux (16) qui génèrent un courant d'air secondaire dirigé axialement vers le tube préformé (11), qui est introduit le long de l'intérieur dudit four, chauffant ainsi son côté interne.

7. Four de chauffage pour tubes préformés (11) avant leur orientation moléculaire, selon la revendication 1, **caractérisé en ce que** les ventilateurs (10) sont disposés dans une position haute et que les déflecteurs (2) sont disposés de telle manière que l'air chaud est projeté vers le bas sur la surface du tube préformé (11).

8. Installation de chauffage pour tubes préformés (11) avant leur orientation moléculaire, selon la revendication 1, **caractérisée en ce qu'**elle comprend :
- un alimentateur (14) qui maintient les tubes préformés (11) à température ambiante ; et
- un four (8), décrit selon l'une quelconque des revendications 1 à 7, qui reçoit les tubes préformés, (11) de l'alimentateur (14) et utilise l'air comme fluide chauffant pour chauffer à sec les tubes préformés (11) jusqu'à ce qu'ils atteignent une température uniforme en termes d'épaisseur.

9. Procédé de chauffage de tubes préformés (11) avant leur orientation moléculaire, comprenant l'introduction d'un tube préformé, qui est initialement à température ambiante, dans un four à air (8) ; et le chauffage du tube préformé (11) dans le four à air (8), conformément à un processus à sec en l'absence d'humidité, jusqu'à ce qu'il atteigne la température d'orientation moléculaire **caractérisé en ce que** le tube préformé (11) tourne autour de son axe pendant le processus de chauffage pendant un certain intervalle de temps le long d'une section du four (8), suivi d'un déplacement transversal vers une autre section parallèle, dans laquelle la rotation et le déplacement transversal ont lieu consécutivement jusqu'à ce que le tube préformé (11) sorte du four, afin d'obtenir une température homogène circonférentielle et d'épaisseur.

10. Procédé de chauffage de tubes préformés (11) avant leur orientation moléculaire, selon la revendication 9, **caractérisé en ce que** le processus de chauffage est effectué uniformément à différentes températures dans différentes zones le long du tube préformé (11).

11. Procédé de chauffage de tubes préformés (11) avant leur orientation moléculaire, selon la revendication 9, **caractérisé en ce que** les tubes préformés (11) sont faits en matériau polymère.
